# EUROPEAN PATENT APPLICATION

(11) **EP 3 258 383 A1**
(43) Date of publication of application: **20.12.2017**
(21) Application number: 16205297.1
(22) Date of filing: 20.12.2016
(51) Int. Cl.: G06F 12/0897, G06F 12/122

(54) **DYNAMICALLY ADJUSTABLE INCLUSION BIAS FOR INCLUSIVE CACHES**

(30) Priority: 13.06.2016 US 201615180982; 15.09.2016 WO PCT/US2016/051819
(71) Applicant: Advanced Micro Devices, Inc., Sunnyvale, CA 94088 (US)
(72) Inventor: MOYER, Paul, Sunnyvale, CA 94088 (US)
(74) Representative: Eve, Rosemary Margaret

(57) **Abstract**

A first cache [120] that includes a plurality of cache lines [210] and is inclusive of a second cache [125]. The plurality of cache lines are associated with a plurality of N-bit values [215]. The first cache modifies each N-bit value [425, 430] in response to a hit at the corresponding one of the plurality of cache lines. The first cache bypasses eviction of a first cache line in response to the N-bit value associated with the first cache line having a first value and the first cache line being included in the second cache. The first cache evicts a second cache line in response to the N-bit value associated with the second cache line having a second value and the second cache line not being included in the second cache.

## Description

### BACKGROUND

### Field of the Disclosure

The present disclosure relates generally to processing systems and, more particularly, to inclusive caches in processing systems.

### Description of the Related Art

Processing systems store copies of information from memory elements, such as dynamic random access memories (DRAMs), in caches that can be accessed more rapidly (*e.g*., with lower latency) by processing units in the processing system. Entries in the cache are referred to as cache lines, which may be indicated by an index and a way in associative caches. The caches can be organized in a hierarchy of caches that includes faster, but relatively smaller, lower level caches such as an L1 cache and slower, but relatively larger, higher level caches such as an L2 cache. The lower level caches may be inclusive such that all data stored in the lower level caches is also stored in a higher level cache. Memory access requests are initially directed to the lowest level cache. If the request hits a cache line in the lowest level cache, data in the cache line is returned to the requesting processing unit. If the request misses in the lower level cache, the request is sent to the next higher level cache. If the request hits a cache line in the higher level cache, data in the higher level cache line is returned to the requesting processing unit. Otherwise, the request is sent to the next higher level cache or the main memory. Data that is retrieved from a higher-level cache (or main memory) in response to a cache miss in a lower level cache is also stored in a cache line of the lower level cache. If the lower level cache is full, one of the cache lines in the lower level cache is evicted to make room for the new data.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a processing system according to some embodiments.
FIG. 2 is a block diagram of an inclusive cache according to some embodiments.
FIG. 3 is a flow diagram of a method for selecting cache lines for eviction from an inclusive cache according to some embodiments.
FIG. 4 is a flow diagram of a method for selectively determining a threshold N-bit value that is used to select cache lines for eviction from an inclusive cache according to some embodiments.
FIG. 5 is a block diagram of a cache in a multithreaded processing system that concurrently executes two threads according to some embodiments.
FIG. 6 is a block diagram of a cache in a multithreaded processing system that concurrently executes four threads according to some embodiments.

### DETAILED DESCRIPTION

Cache replacement policies are used to determine which cache lines should be evicted from a cache, *e.g.,* in the event of a cache miss. For example, a least recently used (LRU) cache replacement policy keeps track of when each cache line was used and evicts the least recently used cache line to make room for new data in the event of a cache miss. For another example, re-reference interval prediction (RRIP) is used to predict the likelihood that the data in a cache line will be used in the future. Caches that implement RRIP associate an N-bit value with each cache line. The N-bit value for a cache line is set to an initial value (*e.g.,* 1 or 2) when new data is inserted in the cache line. The N-bit value for the cache line may then be decremented (or set to 0) in response to a hit and the N-bit values for the other cache lines are incremented in response to the hit. Thus, cache lines with higher N-bit values are less likely to be used in the future than cache lines with lower N-bit values. The cache line with the highest N-bit value may therefore be selected for eviction in response to a cache miss if the cache is full. However, when an RRIP cache replacement policy is implemented in an inclusive cache hierarchy, cache lines in a higher-level cache may be evicted even though the cache line is also included in a lower level cache, which degrades performance because the cache line must also be replaced in the lower level cache to maintain inclusivity.

In some embodiments of RRIP, a bias is introduced so that cache lines in a higher level cache that are also included in a lower level cache may not be evicted even though they have a maximum RRIP value. For example, an L2 cache line with a RRIP of 3 may not be evicted if the L2 cache line is also included in the corresponding L1 cache. However, this approach does not take into account whether the cache line in the lower level cache is being frequently used or not. Eviction of the L2 cache line may therefore be blocked by the presence of an L1 cache line that is not being used, thereby degrading overall performance of the cache system. The performance of a cache that implements RRIP in a multi-threaded processing system may also be degraded by conflicts between different threads. For example, all threads in a multithreaded system begin searching the cache at the first way in the cache (way 0) and continue searching until finding a cache line having the maximum RRIP value. This cache line may then be evicted. However, this approach can lead to thrashing as different threads evict cache lines that were previously inserted by another thread and may still be reused by the other thread.

The performance of a hierarchical cache that implements RRIP may be improved by considering cache lines in a higher level cache as candidates for eviction at RRIP values below a maximum value if the cache lines at the highest RRIP value are included in a lower level cache. For example, higher-level cache lines that have an RRIP value of 2 may be evicted from the higher level cache even though the maximum RRIP value is 3 if the cache lines at the highest RRIP value are included in an inclusive lower level cache. In some cases, set dueling may be used to compare the performance for different values of the lower RRIP. The cache may then be configured to consider evicting lines at a lower RRIP value that is selectively determined based on the performance of subsets of cache lines that are configured to use different values of the RRIP as the cutoff for considering inclusive cache lines as candidates for eviction. In some embodiments that implement multithreaded processing, different threads are configured to begin searching the cache at different ways for each index in the cache to locate a cache line for eviction. For example, if a first thread and a second thread are accessing an 8-way cache (way numbers 0, 1, 2, 3, 4, 5, 6, 7), the first thread starts its search from way 0 and the second thread starts its search from way 4. For another example, if there are 4 threads, thread 0 starts with way 0, thread 1 with way 2, thread 2 with way 4, and thread 3 with way 6. No thread is required to evict a particular cache line, but beginning the search for different threads at different ways biases eviction such that each thread preferentially victimizes cache lines that were inserted by the thread instead of cache lines that were inserted by other threads.

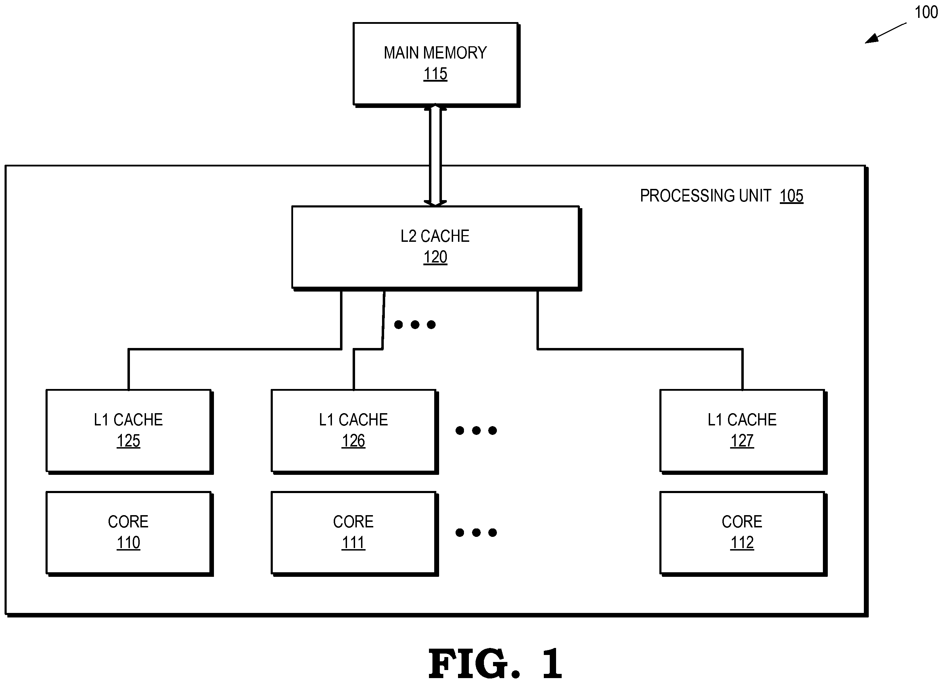

FIG. 1 is a block diagram of a processing system 100 according to some embodiments. The processing system 100 may be implemented as a standalone device or as part of a system-on-a-ship (SOC). The processing system 100 includes a processing unit 105. Examples of processing units 105 include central processing units (CPUs), graphics processing units (GPUs), accelerated processing units (APUs), application-specific integrated circuits (ASICs), field programmable gate arrays (FPGAs), and the like. The processing unit 105 includes a plurality of processor cores 110, 111, 112 (collectively referred to herein as "the cores 110-112") that are configured to execute instructions or manipulate data independently, concurrently, or in parallel. The cores 110-112 may also be referred to as compute units or using similar terms.

The processing system 100 includes a main memory 115 that may be implemented as dynamic random access memory (DRAM). The processing system 100 also implements a hierarchical (or multilevel) cache system that is used to speed access to instructions or data that are stored in the main memory 115 by storing copies of the instructions or data in the caches. The hierarchical cache system depicted in FIG. 1 includes a level 2 (L2) cache 120 for storing copies of instructions or data that are stored in the main memory 115. The cache lines are identified by a combination of an index and a way. Some embodiments of the L2 cache 120 are 4-way associative to the main memory 115 so that each line in the main memory 115 can potentially be copied to and from four ways associated with each index in the L2 cache 120. However, some embodiments of the main memory 115 and the L2 cache 120 are implemented using other associativities including 2-way associativity, 8-way associativity, 16-way associativity, direct mapping, fully associative caches, and the like. Relative to the main memory 115, the L2 cache 120 is implemented using faster memory elements. The L2 cache 120 may also be deployed logically or physically closer to the cores 110-112 (relative to the main memory 115) so that information can be exchanged between the cores 110-112 and the L2 cache 120 more rapidly or with less latency.

The hierarchical cache system also includes a level 1 (L1) caches 125, 126, 127, which are collectively referred to herein as "the L1 caches 125-127." Each of the L1 caches 125-127 is associated with a corresponding one of the cores 110-112 and stores copies of instructions or data for use by the corresponding one of the cores 110-112. Relative to the L2 cache 120, the L1 caches 125-127 are implemented using faster memory elements so that information stored in the cache lines of the L1 caches 125-127 can be retrieved more rapidly by the corresponding cores 110-112. The L1 caches 125-127 may also be deployed logically or physically closer to the corresponding cores 110-112 (relative to the main memory 115 and the L2 cache 120) so that information may be exchanged between the cores 110-112 and the L1 caches 125-127 more rapidly or with less latency (relative to communication with the main memory 115 or the L2 cache 120). Some embodiments of the L1 caches 125-127 are partitioned into instruction caches and data caches (not shown in FIG. 1).

Some embodiments of the L2 cache 120 are inclusive of the L1 caches 125-127 so that cache lines stored in the L1 caches 125-127 also stored in the L2 cache 120. The hierarchical cache system shown in FIG. 1 represents one example of a hierarchical (or multilevel) cache memory system. Some embodiments of the processing system 100 implement other hierarchical cache memory systems that may include more or fewer L1 caches, more L2 caches, additional levels of the cache hierarchy such as L3 caches and L4 caches, or other caches such as translation lookaside buffers, some of which may or may not be inclusive of the others.

In operation, the processor cores 110-112 send memory access requests to the corresponding L1 caches 125-127 to request access to copies of instructions or data that are stored in the L1 caches 125-127. If the requested information is stored in the corresponding cache, *e.g.,* as indicated by a match between an address or a portion of an address in the memory access request and a cache tag associated with a cache line in the cache, the processor core is given access to the cache line. This is conventionally referred to as a cache hit. If the requested information is not stored in any of the cache lines of the corresponding cache, which is conventionally referred to as a cache miss, the memory access request is forwarded to the L2 cache 120. If the memory access request hits in the L2 cache 120, the processor core is given access to the cache line in the L2 cache 120. If the memory access request misses in the L2 cache 120, the memory access request is forwarded to the main memory 115 and the processor core is given access to the location in the main memory 115 indicated by the address in the memory access request.

Cache lines in the L2 cache 120 or the L1 caches 125-127 may be replaced in response to a cache miss. For example, if a memory access request misses in the L1 cache 125 and hits in the L2 cache 120, the instruction or data stored in the accessed cache line of the L2 cache 120 is copied to a cache line in the L1 cache 125 so that it is available for subsequent memory access requests by the corresponding core 110. Information that was previously stored in one of the cache lines must be evicted to make room for the new information if all of the cache lines are currently storing information. Cache lines are selected for eviction based on a replacement policy. Some embodiments of the L2 cache 120 and the L1 caches 125-127 implement a replacement policy that is based on re-reference interval prediction (RRIP). For example, each cache line in the L2 cache 120 and the L1 caches 125-127 is associated with an N-bit value that is set to an initial value (*e.g.,* 1 or 2) when new data is inserted in the cache line. The N-bit value for the cache line is decremented (or set to 0) in response to a hit at the cache line and the N-bit values for the other cache lines are incremented in response to the hit. The cache line with the highest N-bit value is evicted in response to a cache miss if the cache is full.

As discussed herein, some embodiments of the L2 cache 120 are inclusive of the L1 caches 125-127. These embodiments of the L2 cache 120 are therefore required to allocate cache lines to store copies of instructions or data that are stored in the cache lines of the L1 caches 125-127. The L2 cache 120 may therefore consider cache lines as candidates for eviction at RRIP values below a maximum value if the cache lines at the highest RRIP value are included in one or more of the L1 caches 125-127. Some embodiments of the L2 cache 120 compare the performance of subsets of cache lines that are configured to use different values of the RRIP as the cutoff for considering inclusive cache lines as candidates for eviction. The L2 cache 120 selectively determines a lower RRIP value to use as the threshold for eviction of inclusive cache lines based on the comparison. Some embodiments of the cores 110-112 implement multithreaded processing that allows multiple threads to be executed concurrently by the cores 110-112. The different threads are configured to begin searching for cache lines that are eligible for eviction at different ways of the L2 cache 120 or the L1 caches 125-127.

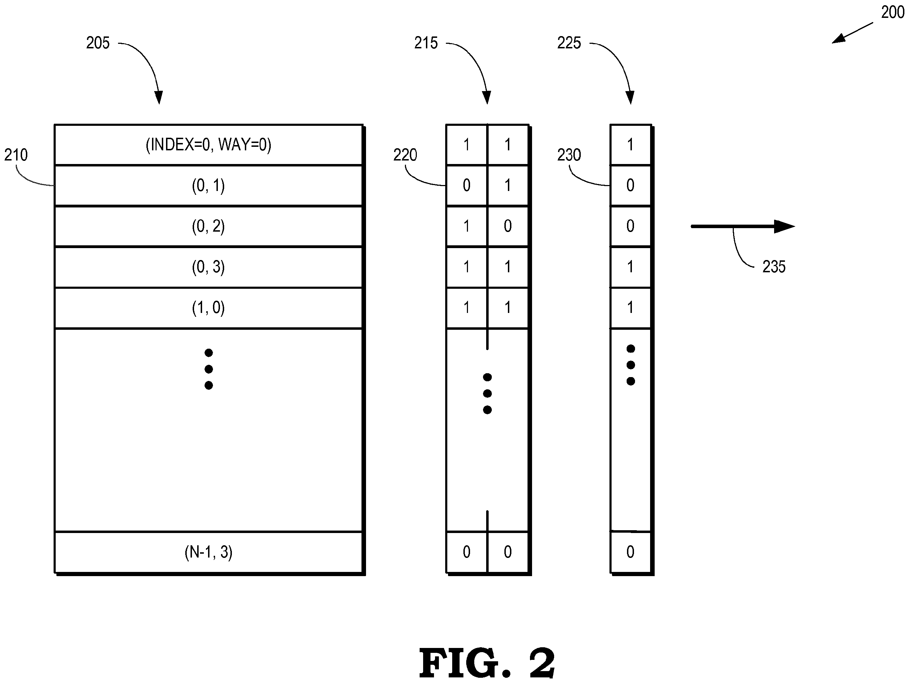

FIG. 2 is a block diagram of an inclusive cache 200 according to some embodiments. The inclusive cache 200 is used to implement some embodiments of the L2 cache 120 shown in FIG. 1. The inclusive cache 200 includes a set 205 of cache lines 210 (only one cache line indicated by a reference numeral in the interest of clarity). The illustrated embodiment of the inclusive cache 200 is 4-way associative so that the cache lines are indicated by an index (0, N-1) and a way (0, 3). However, other embodiments of the inclusive cache 200 may have other associativities, as discussed herein.

The inclusive cache 200 also includes an array 215 of N-bit values 220 associated with each of the cache lines 210. Only one of the N-bit values 220 is indicated by a reference numeral in the interest of clarity. The N-bit values 220 shown in FIG. 2 include two bits to represent values in the range 0-3 but other embodiments may use more or fewer bits to represent larger or smaller ranges. The N-bit value 220 for a cache line 210 is set to an initial value when new data is inserted in the cache line. For example, the N-bit value 220 for the cache line 210 indicated by index 0 and way 1 is initialized to a value of 1 by setting the first bit to 0 and the second bit to 1. The N-bit value 220 for a cache line 210 is decremented in response to a hit at the cache line 210. For example, the N-bit value 220 for the cache line 210 indicated by index N-1 and way 3 is set to a value of 0 by setting the first bit to 0 and the second bit to 0. The N-bit values for the other cache lines are incremented in response to the hit.

The inclusive cache 200 also maintains state information 225 that indicates whether each of the cache lines 210 is included in one or more lower level caches, such as the L1 caches 125-127 shown in FIG. 1. Some embodiments of the state information 225 include bits 230 that are set to one value (*e.g.,* a value of 1) to indicate that the corresponding cache line is included in a lower level cache and a different value (*e.g.,* a value of 0) to indicate that the corresponding cache line is not included in a lower level cache. For example, the value of the bit 230 associated with the cache line 210 indicated by the index of 0 and the way of 0 is set to a value of 1 to indicate that the corresponding cache line is included in one or more lower level caches. For another example, the value of the bit 230 associated with the cache line 210 indicated by the index of 0 and the way of 1 is set to a value of 0 to indicate that the corresponding cache line is not included in one or more lower level caches.

Cache lines 210 are selected for eviction (*e.g.,* in response to a cache miss to the cache 200) based on the N-bit values 230 in the array 215. For example, cache lines having a maximum N-bit value of 3 may be selected for eviction from the cache 200 in response to a cache miss. However, as discussed herein, evicting a cache line 210 from the cache 200 requires evicting one or more cache lines from one or more lower level caches if the cache line 210 is inclusive of a cache line in one or more of the lower level caches. Cache lines having a lower N-bit value are therefore considered for eviction if all of the cache lines having the maximum N-bit value are inclusive of cache lines in one or more lower level caches. For example, the cache lines 210 indicated by the index/way combinations (0, 0), (0, 3), and (1, 0) have N-bit values 220 that are equal to the maximum N-bit value, but all of these cache lines 210 are inclusive of one or more lower level cache lines, as indicated by the value of 1 in the corresponding bits 230 of the state information 225. Cache lines having lower N-bit values 220 are therefore considered for eviction. For example, the cache line 210 indicated by the index/way combination (0, 2) has a N-bit value equal to a threshold value of 2 and may therefore be evicted from the cache 200, as indicated by the arrow 235. The threshold N-bit value for considering cache lines for eviction may be set dynamically, *e.g*., using set dueling techniques as discussed herein.

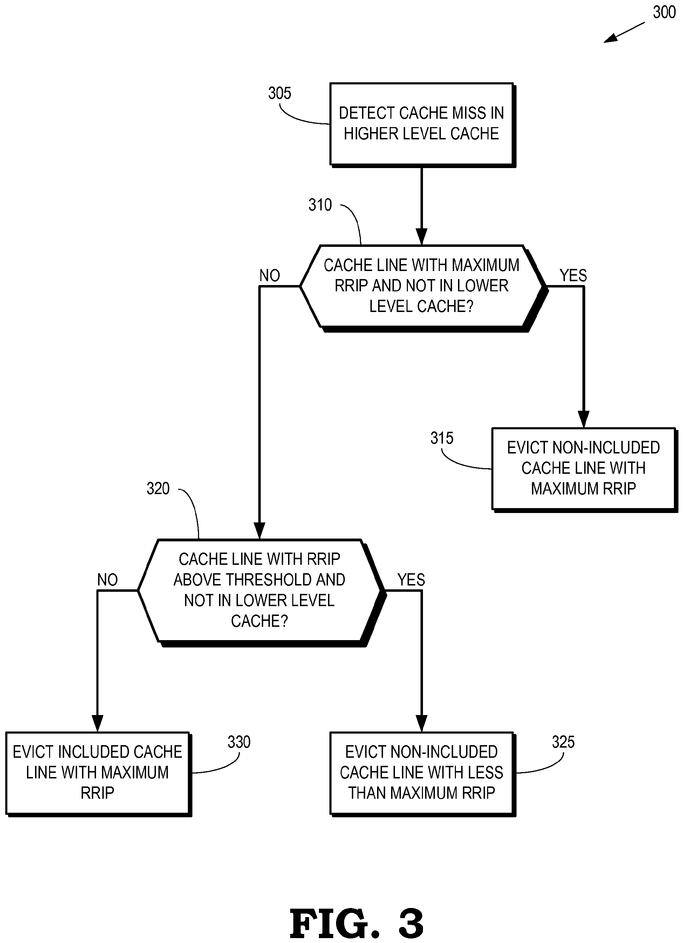

FIG. 3 is a flow diagram of a method 300 for selecting cache lines for eviction from an inclusive cache according to some embodiments. The method 300 is implemented in some embodiments of the L2 cache 120 shown in FIG. 2. Portions of the method are performed by a processor core such as some embodiments of the cores 110-112 shown in FIG. 2.

At block 305, a cache miss is detected in the higher level, inclusive cache. The higher level cache implements an RRIP cache replacement policy and so the higher level cache maintains an array of N-bit values such as the array 215 of N-bit values 220 shown in FIG. 2. In response to detecting the cache miss, the N-bit values associated with the cache lines in the higher level cache are examined to determine whether any of the N-bit values are equal to the maximum N-bit value. At decision block 310, the processor core determines whether there is a cache line associated with an N-bit value that is equal to the maximum N-bit value and is not included in a lower level cache. For example, the processor core uses state information such as the state information 225 shown in FIG. 2 to determine whether the cache lines are included in one or more lower level caches. If so, the cache line associated with the maximum N-bit value is evicted at block 315. If all the cache lines associated with N-bit values that are equal to the maximum N-bit value are included in one or more lower level caches, the method 300 flows to decision block 320.

At decision block 320, the processor core compares the N-bit values of the cache lines to a threshold that is less than the maximum N-bit value. Some embodiments of the threshold may be selectively determined using set dueling techniques, as discussed herein. If the processor core identifies a cache line that has an N-bit value that is above or equal to the threshold and the cache line is not included in one or more lower level caches, the processor core selects the non-included cache line for eviction at block 325. If the processor core is not able to identify a cache line that has an N-bit value that is above or equal to the threshold and is not included in one or more lower level caches, the processor core selects a cache line associated with the maximum N-bit value for eviction from the higher-level cache at block 330.

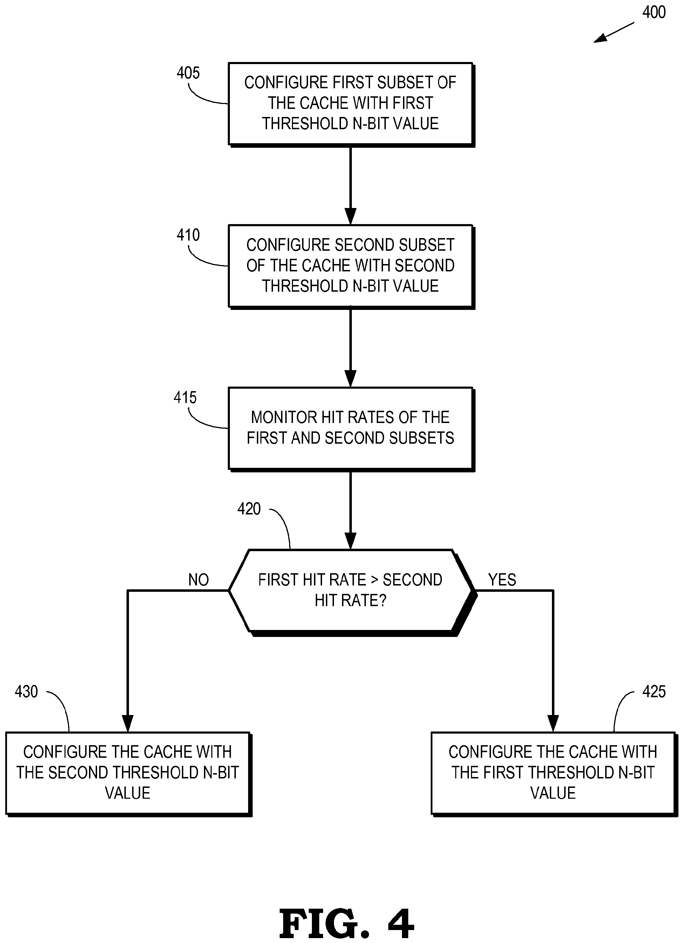

FIG. 4 is a flow diagram of a method 400 for selectively determining a threshold N-bit value that is used to select cache lines for eviction from an inclusive cache according to some embodiments. The method 400 is implemented in some embodiments of the L2 cache 120 shown in FIG. 2. Portions of the method 400 are implemented by a processor core such as some embodiments of the cores 110-112 shown in FIG. 2.

At block 405, the processor core configures a first subset of cache lines in the inclusive cache to use a first threshold N-bit value to select cache lines for eviction, *e.g*., according to some embodiments of the method 300 shown in FIG. 3. For example, the processor core selects a subset of cache lines that are indicated by a range of indices, ways, or other identifiers. At block 410, the processor core configures a second subset of cache lines in the inclusive cache to use a second threshold N-bit value to select cache lines for eviction, *e.g*., according to some embodiments of the method 300 shown in FIG. 3. The first and second subsets of the cache lines correspond to a fraction of the cache lines in the inclusive cache. For example, the first and second subsets of the cache lines may include 1-10% of the cache lines in the inclusive cache.

At block 415, the processor core monitors hit rates for the cache lines in the first and second subsets. For example, the processor core may monitor hit rates for the cache lines in the first and second subsets over a predetermined time interval. At decision block 420, the processor core determines whether the first hit rate is larger than the second hit rate. If so, the processor core determines that the first threshold N-bit value provides better performance and therefore configures (at block 425) the remaining cache lines (*e.g.,* the cache lines that are not included in either the first or the second subsets) to select cache lines for eviction based on the first threshold N-bit value, *e.g*., according to some embodiments of the method 300 shown in FIG. 3. If the second hit rate is greater than the first hit rate, the processor core determines that the second threshold N-bit value provides better performance and therefore configures (at block 430) the remaining cache lines to select cache lines for eviction based on the second threshold N-bit value. The method 400 may be iterated so that the cache replacement policy of the inclusive cache is dynamically modified in response to changing behavior in the first and second subsets of the cache.

In some embodiments of the method 400, the processor core monitors miss rates associated with the first and second subsets of cache lines, either instead of monitoring hit rates or in addition to monitoring hit rates. Although the actual cache miss is not associated with any subset of cache lines in the cache, the cache miss results in a hit at a higher level cache or in main memory. The first and second subsets of cache lines in the lower level cache are mapped to corresponding subsets in the higher level cache or in the main memory. The hit in the higher level cache or main memory can therefore be mapped back to the lower level cache, which allows the initial cache miss to be associated with the first or the second subset of the cache lines. Some embodiments of the processor core compare the miss rates for the first and second subsets of cache lines and use the comparison to select the first or second threshold N-bit values to configure the cache replacement policy of the remaining cache lines. For example, the processor core may configure the remaining cache lines to use the first threshold N-bit value if the cache miss rate associated with the first subset is lower than the cache miss rate associated with the second subset. The processor core configures the remaining cache lines to use the second threshold N-bit value if the cache miss rate associated with the second subset is lower than the cache miss rate associated with the first subset.

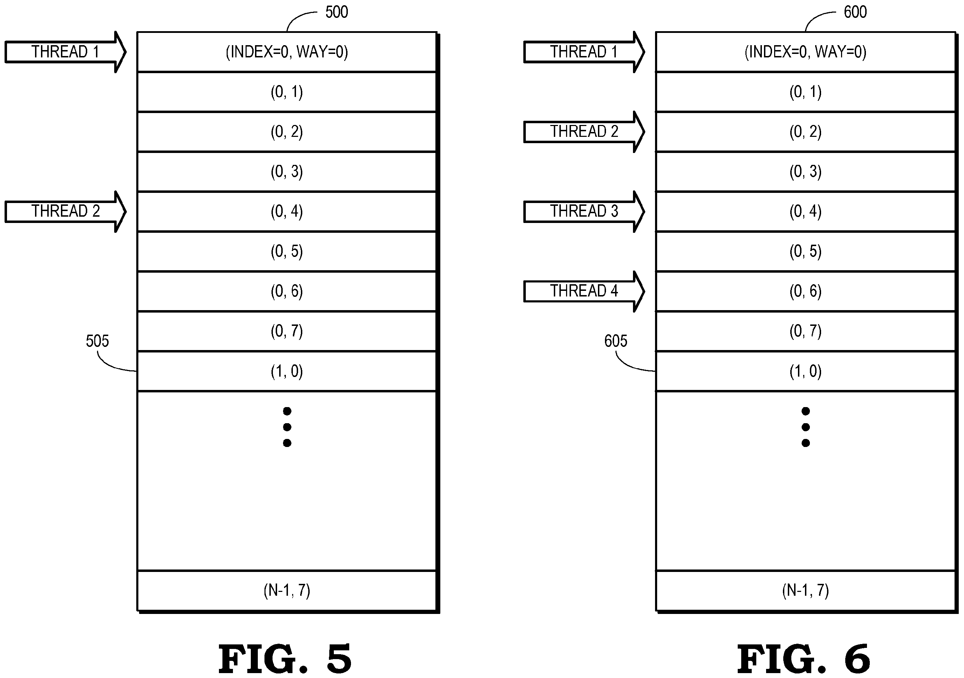

FIG. 5 is a block diagram of a cache 500 in a multithreaded processing system that concurrently executes two threads according to some embodiments. The cache 500 is used to implement some embodiments of the L2 cache 120 or the L1 caches 125-127 shown in FIG. 1. The cache 500 includes a plurality of cache lines 505. Only one of the cache lines 505 is indicated by a reference numeral in the interest of clarity. The cache lines 505 are identified by a combination of an index and a way. For example, the cache 500 is shown as an 8-way associative cache so that each index is associated with eight ways (0-7). The values of the index range from 0 to N-1.

In the illustrated embodiment, two threads (THREAD 1 and THREAD 2) are executing in the multithreaded processing system. Both of the threads send memory access requests to the cache 500. In the event of a cache miss, the thread that issued the memory access request that resulted in the cache miss initiates a search of the cache 500 for a cache line that is eligible for eviction, *e.g*., according to embodiments of the method 300 shown in FIG. 3. The cache lines 505 in the cache 500 are partitioned into a number of groups that is determined based on the number of threads that are concurrently executing in the multithreaded processing system. For example, the cache lines 505 may be partitioned into a first group that includes ways 0-3 and a second group that includes ways 4-7. The first group is associated with THREAD 1 and the second group is associated with THREAD 2. The different threads initiate the search for a cache line to evict within their associated group. For example, THREAD 1 begins searching for a cache line to evict at way 0 of the first group and THREAD 2 begins searching for a cache line to evict at way 4 of the second group.

FIG. 6 is a block diagram of a cache 600 in a multithreaded processing system that concurrently executes four threads according to some embodiments. The cache 600 is used to implement some embodiments of the L2 cache 120 or the L1 caches 125-127 shown in FIG. 1. The cache 600 includes a plurality of cache lines 605. Only one of the cache lines 605 is indicated by a reference numeral in the interest of clarity. The cache lines 605 are identified by a combination of an index and a way. For example, the cache 600 is shown as an 8-way associative cache so that each index is associated with eight ways (0-7). The values of the index range from 0 to N-1.

In the illustrated embodiment, four threads (THREAD 1, THREAD 2, THREAD 3, and THREAD 4) are executing in the multithreaded processing system. Each of the four threads sends memory access requests to the cache 600. In the event of a cache miss, the thread that issued the memory access request that resulted in the cache miss initiates a search of the cache 600 for a cache line that is eligible for eviction, *e.g*., according to embodiments of the method 300 shown in FIG. 3. The cache lines 605 in the cache 600 are partitioned into four groups that correspond to the four threads that are concurrently executing in the multithreaded processing system. For example, the cache lines 605 may be partitioned into a first group that includes ways 0-1, a second group that includes ways 2-3, a third group that includes ways 4-5, and a forth group that includes ways 6-7. The first group is associated with THREAD 1, the second group is associated with THREAD 2, the third group is associated with THREAD 3, and the fourth group is associated with THREAD 4. The different threads initiate the search for a cache line to evict within their associated group. For example, THREAD 1 begins searching for a cache line to evict at way 0 of the first group, THREAD 2 begins searching for a cache line to evict at way 2 of the second group, THREAD 3 begins searching for a cache line to evict at way 4 of the third group, and THREAD 4 begins searching for a cache line to evict at way 6 of the second group.

In some embodiments, the apparatus and techniques described above are implemented in a system comprising one or more integrated circuit (IC) devices (also referred to as integrated circuit packages or microchips), such as the hierarchical cache described above with reference to FIGs. 1-6. Electronic design automation (EDA) and computer aided design (CAD) software tools may be used in the design and fabrication of these IC devices. These design tools typically are represented as one or more software programs. The one or more software programs comprise code executable by a computer system to manipulate the computer system to operate on code representative of circuitry of one or more IC devices so as to perform at least a portion of a process to design or adapt a manufacturing system to fabricate the circuitry. This code can include instructions, data, or a combination of instructions and data. The software instructions representing a design tool or fabrication tool typically are stored in a computer readable storage medium accessible to the computing system. Likewise, the code representative of one or more phases of the design or fabrication of an IC device may be stored in and accessed from the same computer readable storage medium or a different computer readable storage medium.

A computer readable storage medium may include any non-transitory storage medium, or combination of non-transitory storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. An apparatus [100] comprising:
a first cache [120] that includes a plurality of cache lines [210] and is inclusive of a second cache; and
a plurality of N-bit values [215], wherein:
each N-bit value is associated with a corresponding one of the plurality of cache lines in the first cache,
the first cache is to modify [425, 430] each N-bit value in response to a hit at the corresponding one of the plurality of cache lines,
the first cache is configured to bypass eviction of a first cache line in response to the N-bit value associated with the first cache line having a first value and the first cache line being included in the second cache, and
the first cache is configured to evict [315] a second cache line in response to the N-bit value associated with the second cache line having a second value and the second cache line not being included in the second cache.

2. The apparatus as claimed in claim 1, wherein the N-bit value associated with each of the plurality of cache lines in the first cache is decremented in response to a hit at the corresponding cache line until the N-bit value reaches a value of zero.

3. The apparatus as claimed in claim 2, wherein the N-bit value associated with each of the plurality of cache lines in the first cache is incremented in response to a hit at one of the other cache lines until the at least one bit reaches the first value.

4. The apparatus as claimed in claim 3, wherein the second value is less than the first value.

5. The apparatus as claimed in claim 1, wherein the first cache is configured to evict the second cache line in response to all the first cache lines that have an N-bit value equal to the first value being included in the second cache.

6. The apparatus as claimed in claim 1, wherein the first cache comprises:
a first subset of cache lines, and wherein the first cache is configured to evict a third cache line from the first subset in response to an N-bit value associated with the third cache line having a third value and the third cache line not being included in the second cache; and
a second subset of cache lines, wherein the first cache is configured to evict a fourth cache line from the second subset in response to an N-bit value associated with the fourth cache line having a fourth value and the fourth cache line not being included in the second cache.

7. The apparatus as claimed in claim 6, wherein the second value is selectively set equal to the third value or the fourth value based on a comparison of at least one of a hit rate and a miss rate for the first subset of cache lines and the second subset of cache lines [415].

8. The apparatus as claimed in claim 1, wherein the first cache is configured to begin searching the first cache for cache lines associated with a plurality of threads at different locations for each of the plurality of threads, or
wherein the first cache is configured to begin searching the first cache for cache lines associated with a plurality of threads at different locations for each of the plurality of threads, and
the first cache is configured to partition ways of an index of the first cache into a plurality of groups corresponding to the plurality of threads [500], and
the first cache is configured to begin searching the first cache for cache lines associated with each of the plurality of threads at one of the ways of a corresponding one of the plurality of groups.

9. A method comprising:
modifying N-bit values [425, 430] associated with each of a plurality of cache lines [205] in a first cache in response to a hit at one of the plurality of cache lines, wherein the first cache [120] is inclusive of a second cache [125];
bypassing eviction of a first cache line from the first cache in response to the N-bit value associated with the first cache line having a first value and the first cache line being included in the second cache; and
evicting a second cache line from the first cache in response to the N-bit value associated with the second cache line having a second value and the second cache line not being included in the second cache [315].

10. The method as claimed in claim 9, wherein modifying the N-bit value associated with each of the plurality of cache lines in the first cache comprises decrementing an N-bit value of a corresponding cache line in response to a hit at the corresponding cache line until the N-bit value reaches a value of zero.

11. The method as claimed in claim 10, wherein modifying the N-bit value associated with each of the plurality of cache lines in the first cache comprises incrementing the N-bit value of the corresponding cache line in response to a hit at one of the other cache lines until the N-bit value of the corresponding cache line reaches the first value.

12. The method as claimed in claim 9, wherein evicting the second cache line comprises evicting the second cache line in response to all the first cache lines that have an N-bit value equal to the first value being included in the first cache.

13. The method as claimed in claim 9, further comprising:
evicting a third cache line from a first subset of cache lines in the first cache in response to an N-bit value associated with the third cache line having a third value and the third cache line not being included in the second cache; and
evicting a fourth cache line from a second subset of cache lines in the first cache in response to an N-bit value associated with the fourth cache line having a fourth value and the fourth cache line not being included in the second cache.

14. The method as claimed in claim 13, further comprising:
comparing at least one of a hit rate and a miss rate [420] for the first subset of cache lines and the second subset of cache lines; and
selectively setting the second value equal to the third value or the fourth value based on the comparison.

15. The method as claimed in claim 9, further comprising:
searching the first cache for cache lines associated with a plurality of threads beginning at different locations for each of the plurality of threads [500], or
searching the first cache for cache lines associated with a plurality of threads beginning at different locations for each of the plurality of threads, and
partitioning ways of an index of the first cache into a plurality of groups corresponding to the plurality of threads, and
wherein searching the first cache comprises searching the first cache for cache lines associated with each of the plurality of threads beginning at one of the ways of a corresponding one of the plurality of groups.
